(19) Europäisches Patentamt
European Patent Office
Office européen des brevets

(11) Veröffentlichungsnummer: **0 460 482 A2**

(12) **EUROPÄISCHE PATENTANMELDUNG**

(21) Anmeldenummer: **91108519.9**

(22) Anmeldetag: **25.05.91**

(51) Int. Cl.5: **C09D 11/02**, C09B 62/78

(30) Priorität: **07.06.90 DE 4018182**

(43) Veröffentlichungstag der Anmeldung:
**11.12.91 Patentblatt 91/50**

(84) Benannte Vertragsstaaten:
**CH DE FR GB LI**

(71) Anmelder: **BAYER AG**

**W-5090 Leverkusen 1 Bayerwerk(DE)**

(72) Erfinder: **Reuter, Knud, Dr.**
**Scheiblerstrasse 99**
**W-4150 Krefeld(DE)**
Erfinder: **Scholl, Thomas, Dr.**
**Elbinger Strasse 33**
**W-4005 Meerbusch 2(DE)**

(54) **Druckfarben.**

(57) Farbmittelzubereitungen, insbesondere Druckfarben enthalten als Zusatz Verbindungen der Formel

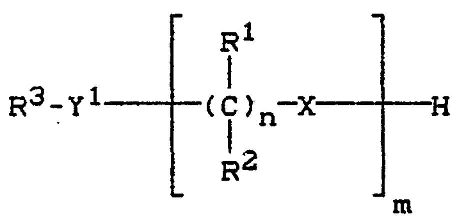

mit den in der Beschreibung angegebenen Substituentenbedeutungen.

Der Zusatz verhindert weitgehend das unerwünschte "Aufbauen" beim Drucken.

EP 0 460 482 A2

Gegenstand der vorliegenden Erfindung sind Farbmittelzubereitungen wie Druckfarben, insbesondere Offsetdruckfarben, welche Verbindungen der Formel

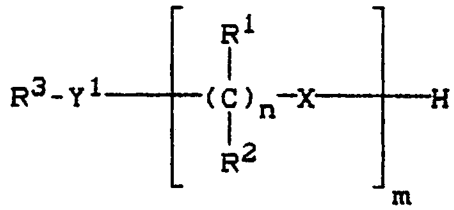

(A)

enthalten, worin

$R^1$ und $R^2$ unabhängig voneinander und unabhängig von jeder Wiederholungseinheit H, $C_{1-24}$-Alkyl, Aryl oder $C_{1-24}$-Alkaryl,

$R^3$ H, $C_{1-24}$-Alkyl, Aryl, $C_{1-24}$-Alkaryl - wobei $R^3$ gegebenenfalls 1-3 weitere Substituenten der Reihe -O-$R^1$, -$NR^1R^2$ oder Reste

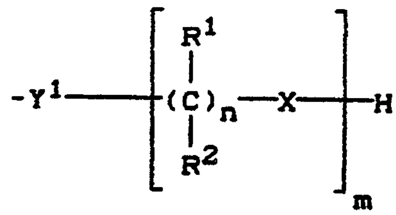

tragen kann,

$Y^1$ O, S, $NR^1$,

X unabhängig von jeder Wiederholungseinheit, O, S,

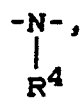

wobei $R^4$ = H, $C_{1-24}$-Alkyl, Aryl, $C_{1-24}$-Alkyl-aryl oder

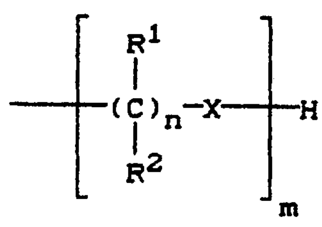

n eine ganze Zahl von 2-4 und

m eine ganze Zahl von 3-450 bedeutet,

sowie die Verwendung der Verbindungen (A) als Zusatz zu Farbmittelzubereitungen, insbesondere Druckfarben.

Die Verbindungen der Struktur (A) stellen Polyether dar, wie man sie z.B. durch Polyalkoxylierung niederer Alkohole oder Polyole, wie Methanol, Ethanol, Propanol, Butan-, Pentan- oder Hexanole, oder Phenolen, wie z.B. Phenol, Kresol, Nonylphenol, Dodecylphenol oder Phenol/Formaldehyd-Harzen z.B. aus Phenol, Alkyl oder Alkylarylphenolen und Formaldehyd oder Aminen oder Polyaminen, wie z.B. Ammoniak, Butylamin, Dibutylamin, Ethylendiamin, Diethylentriamin, Triethylentetramin mit Ethylenoxid, Propylenoxid, 1,2- und 2,3-Epoxybutan, Epichlorhydrin, Dodecenoxid, Octadecenoxid o.ä. gewinnt. Hierbei können Blockpolymere oder Polymere mit statistischer Verteilung der Oxyalkylgruppen, sog. Mischpolymere, oder auch

Mischformen, hergestellt werden. Bevorzugt sind solche Produkte hergestellt aus einer Mischung aus Propylenoxid und Ethylenoxid. Besonders bevorzugt sind Polyether, gestartet auf Alkanolen, Alkandiolen, -triolen und -polyolen und umgesetzt mit Propylenoxid und anschließend mit 10-20 Gew.-% ethoxyliert (bez. auf Gesamtmenge Polyether).

Ebenfalls geeignete Polyether sind durch sauer katalysierte Polymerisation von cyclischen Ethern (Ethylenoxid, Propylenoxid, Oxetan, Tetrahydrofuran) zugänglich, Beispiel für solche Polyether ist Poly-Tetrahydrofuran. Die Herstellungsverfahren für derartige Polyether sind bekannt. Diese Produkte sind im Handel erhältlich.

Geeignet sind auch Amino-, Alkylamino- und Dialkylaminoterminierte Polyether, hergestellt aus den erwähnten OH-terminierten Polyethern durch Umsetzung mit Ammoniak oder Aminen. Auch derartige Produkte sind im Handel erhältlich (z.B. Jeffamine TM, Texaco).

Erfindungsgemäß zu verwendende Polyether erhält man auch durch Kettenverlängerung der genannten Hydroxyl- oder Amino-terminierten Polyether durch Umsetzung mit Di- oder Polyisocyanaten, Di- oder Polycarbonsäuren, Formaldehyd, Di- oder Polyglycidylethern etc. (s. z.B. EP-A-55 433 und EP-A-55 434).

Bevorzugte Polyether der Struktur (A) besitzen ein mittleres Molekulargewicht (Gewichtsmittel) von 500-100.000 (gemessen mittels Gelpermeationschromatographie).

Die erfindungsgemäßen Farbmittelzubereitungen wie Druckfarben, insbesondere Offsetdruckfarben enthalten im allgemeinen 0,01-20 Gew.-% der Verbindungen (A), wobei auch verschiedene unter die allg. Strukturformel (A) fallende Verbindungen in Mischung nebeneinander eingesetzt werden können. Bevorzugt wird die Menge der Verbindungen (A) in den erfindungsgemäßen Mischungen so gewählt, daß beispielsweise die fertige Offsetdruckfarbe 0,1-5, insbesondere 0,2-2 Gew.-% (A) enthält, bezogen auf das Gesamtgewicht der Druckfarbe.

Bevorzugt sind Farbmittel-Zubereitungen insbesondere Offsetdruckfarben der obigen Beschreibung, enthaltend Verbindungen der Formel (A) mit $n = 2$, $X = O$, $R^1 = H$, $R^2 = H$ oder $CH_3$, $Y^1 = O$ und $R^3 =$ Rest eines mono-, di-, tri- oder tetrafunktionellen aliphatischen Alkohols mit 2 bis 8 C-Atomen, insbesondere Rest eines aliphatischen Diols oder Triols mit 2 - 12 C-Atomen und $m = 10\text{-}100$.

Typische Beispiele für Zusatzmittel (A) sind (idealisierte Strukturen):

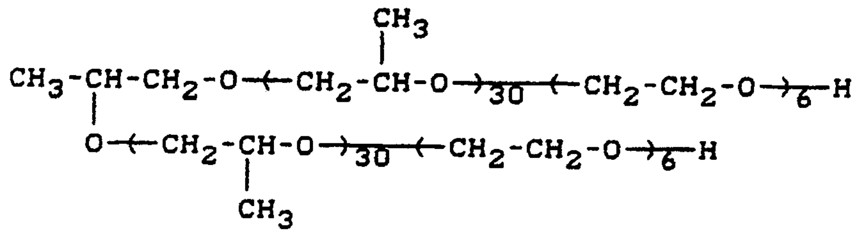

(B)

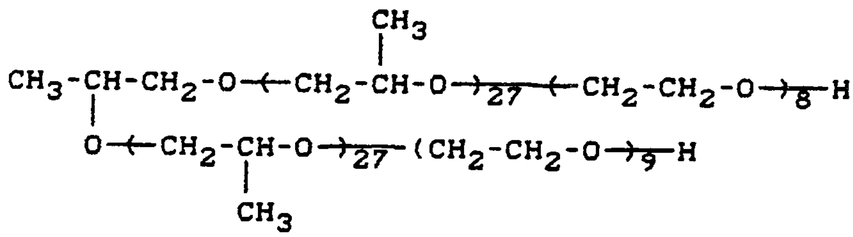

(C)

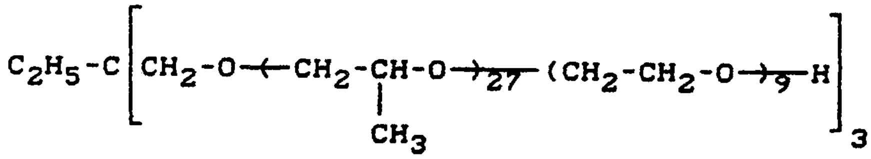

(D)

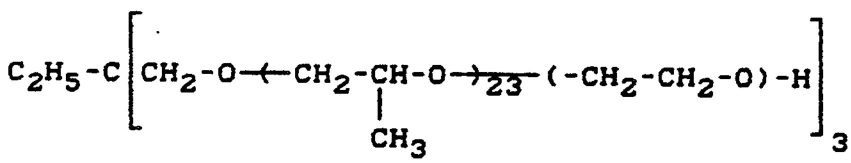

(E)

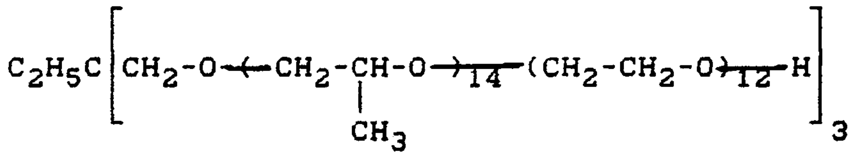

(F)

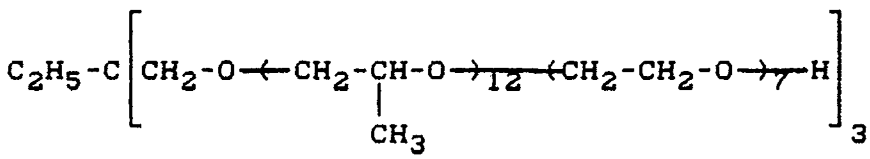

(G)

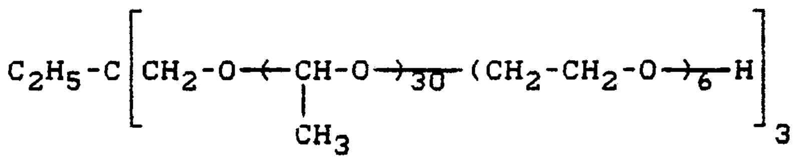

(H)

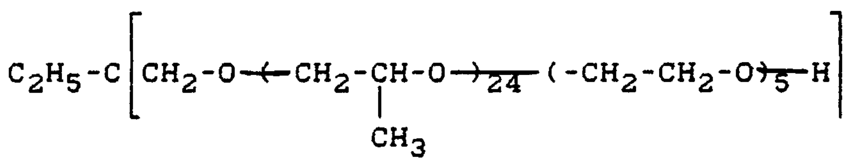

(I)

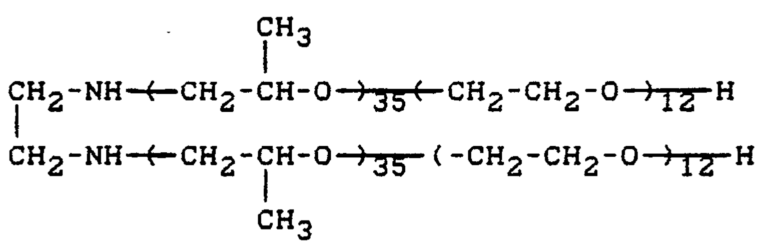

(J)

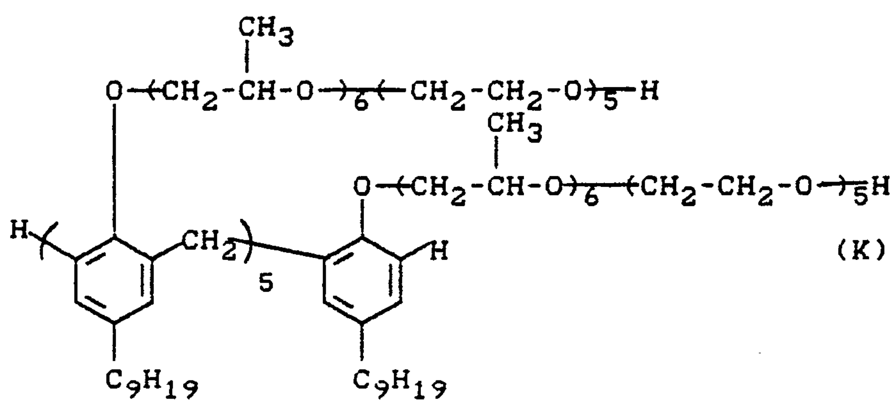

(K)

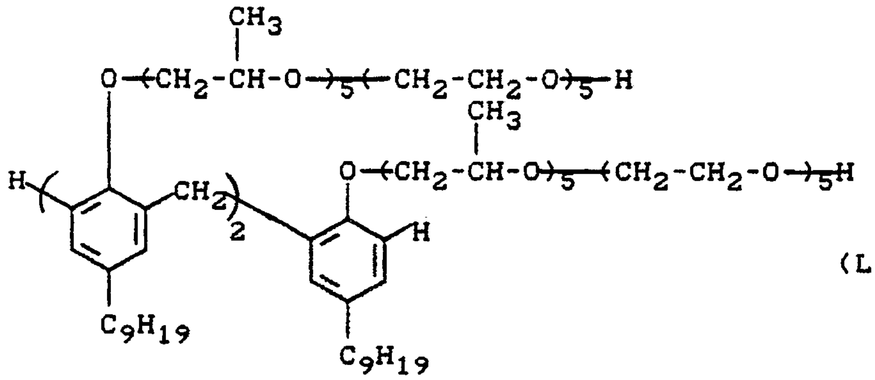

(L)

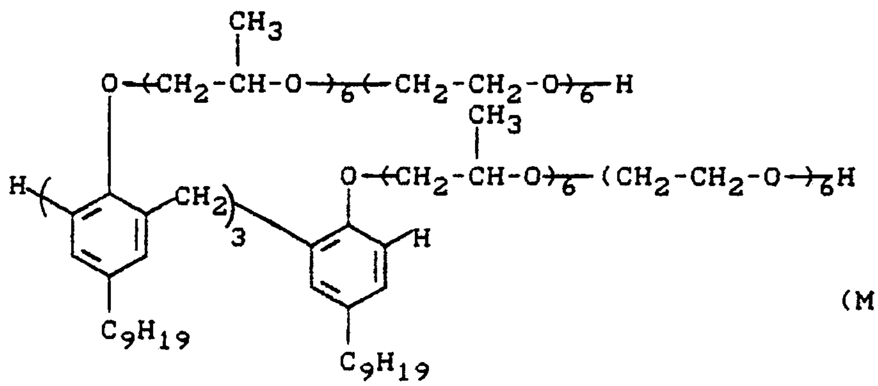

(M)

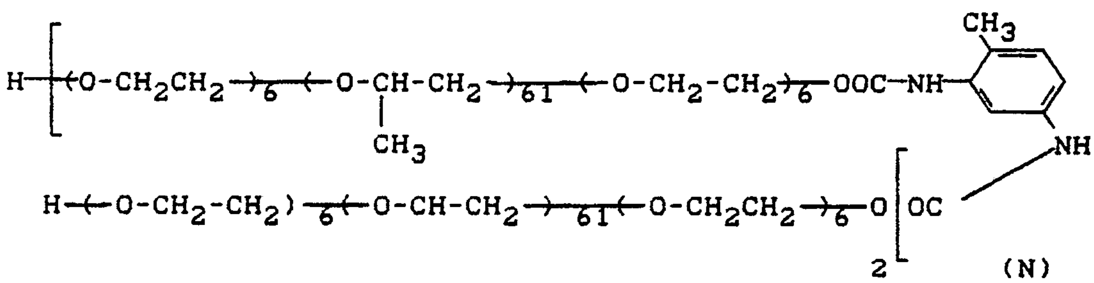

(N)

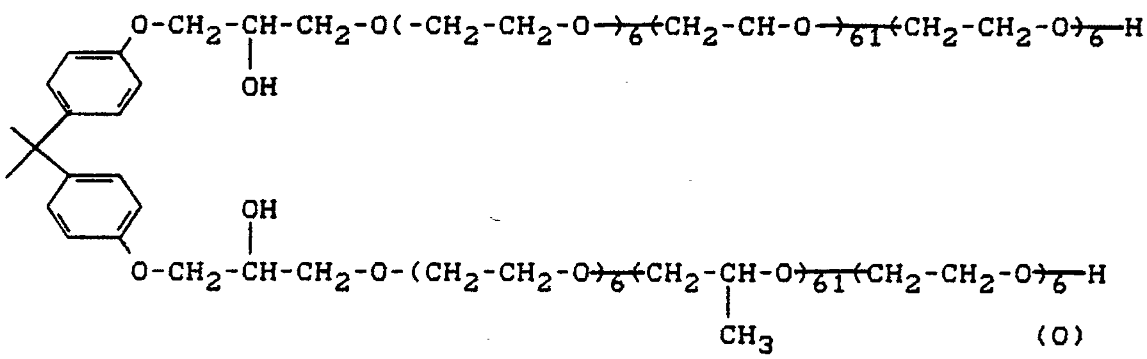

(O)

Die erfindungsgemäßen Offsetdruckfarben eignen sich für den Bogen- und Rollenoffsetdruck, insbesondere auch für den heat-set-Offsetdruck.

Die Farbmittelzubereitungen, insbesondere Druckfarben, beispielsweise Offsetdruckfarben bestehen im wesentlichen aus Firnis, z.B. Alkydharz und Farbmitteln, beispielsweise Pigmenten sowie weiteren üblichen Zusatzmitteln wie Mineralölen, Sikkativen, Hautverhinderungsmitteln etc.

Bevorzugte Druckfarben sind dabei solche, die als Farbmittel mindestens einen Farbstoff enthalten, der durch Reaktion eines Farbstoffs der Formel $F(Y'H)_n$ (I), in der F ein Farbstoffrest,

Y' -O-, -S-,

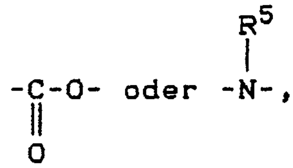

$R^5$ Wasserstoff, Alkyl, vorzugsweise $C_1$-$C_4$-Alkyl, Cycloalkyl, vorzugsweise Cyclopentyl und Cyclohexyl und

n 1, 2, 3, 4, 5 oder 6 bezeichnen,

mit einer Verbindung, die mindestens 1 Isocyanatgruppe und mindestens 18 C-Atome enthält, erhalten worden ist.

Farbstoffe dieser Art sind beschrieben in EP 271 781.

Bevorzugte Farbmittel(gemische) werden erhalten durch Umsetzung von etwa 3 bis etwa 70 Gew.-% des Farbstoffs der Formel $F(Y'H)_n$ (I) mit etwa 97 bis etwa 30 Gew.-% eines isocyanatgruppenhaltigen Harzes, das durch Umsetzung von

a) etwa 8 bis etwa 35 Gew.-% eines Polyalkohol(gemisch)s mit 2-6 OH-Gruppen,

b) etwa 15 bis etwa 80 Gew.-% einer Monocarbonsäure oder eines Monocarbonsäuregemischs,

c) etwa 0 bis etwa 50 Gew.-% eines aliphatischen, cycloaliphatishcen oder aromatischen Diisocyanat(gemisch)s, dessen Isocyanatgruppen bei der Bildung des Harzes alle umgesetzt werden und

e) etwa 9 bis etwa 75 Gew.-% eines aliphatischen, cycloaliphatischen oder aromatischen Diisocyanats oder eines Gemisches von Diisocyanaten, wobei die einzelnen Diisocyanate nach der Bildung des Harzes im Durchschnitt je eine unumgesetzte Isocyanatgruppe behalten, erhältlich ist.

Die Druckfarben gemäß der vorliegenden Erfindung enthalten bevorzugt Farbmittel der Formel

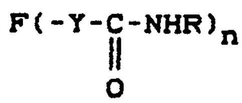 (II)

in der

F einen Farbstoffrest,

Y eine direkte Bindung oder den Rest einer an die NCO-Funktion addierbaren Gruppe -Y-H,

R einen organischen Rest und

n 1, 2, 3, 4, 5 oder 6 bezeichnen, wobei für n ≧ 2 die Reste

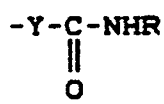

gleich oder verschieden sein können

mit der Maßgabe, daß die Gesamtzahl der C-Atome der n R-Reste ≧ 18 ist.

(Es sei darauf hingewiesen, daß die einmal gegebene Definition eines Restes oder Indexes im folgendem Text, auch im anderen Zusammenhang, beibehalten wird).

Besonders bevorzugte Farbmittel entsprechen der Formel

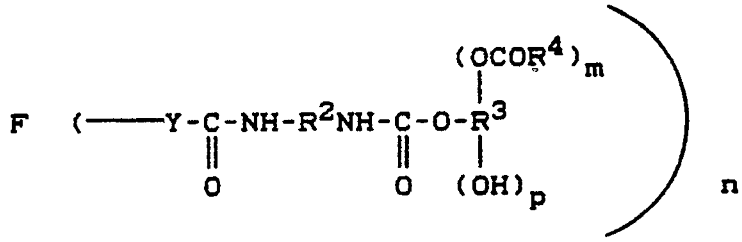 (III)

in der

$R^2$, $R^4$ = organische Reste,
$R^3$ = einen aliphatischen Rest,
m = 1, 2, 3, 4, 5 und
p = 0, 1, 2, 3, 4, 5 bezeichnen.

Weiterhin bevorzugt sind Farbstoffe, die ein Strukturelement

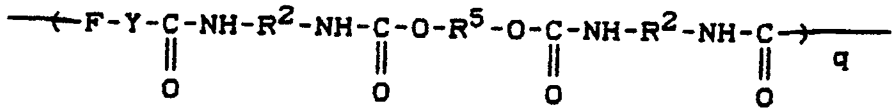 (IV)

aufweisen, bei dem

$R^5$ = 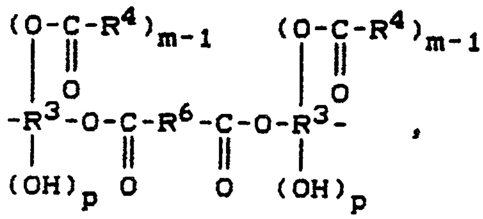 , 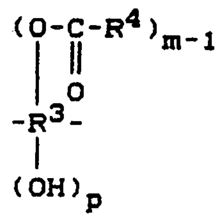

oder

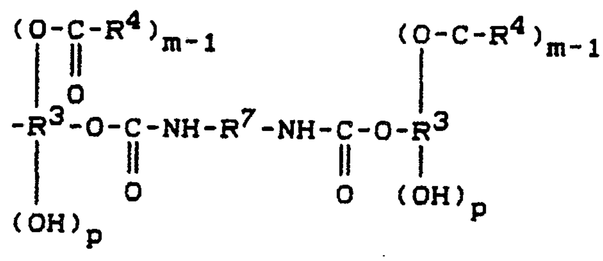

$R^6$, $R^7$ = organische Reste und
q = 2, 3, 4, 5 6, 7, 8, 9, 10 bezeichnen.

$R^2$, $R^7$ stehen bevorzugt für Alkylen, Cycloalkylen oder Arylenreste z.B. für

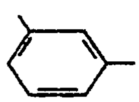 , 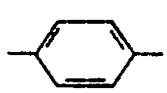 , 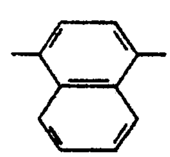 , 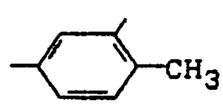 ,

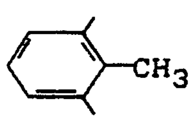 , 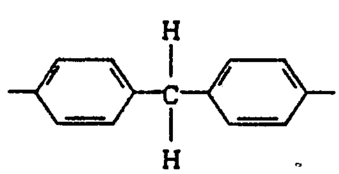 , 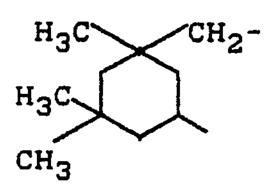

$-CH_2CH_2CH_2CH_2CH_2CH_2-$, 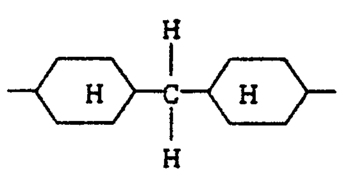

$R^3$ steht bevorzugt für einen Alkylrest, besonders bevorzugt einen $C_1$-$C_8$-Alkylrest, der durch O-Atome unterbrochen und, z.B. durch $C_1$-$C_6$-Alkoxy, substituiert sein kann, für den Fall, daß $R^3$ sich von einem Zuckeralkohol ableitet, kann $R^3$ auch eine cyclische Ethergruppierung aufweisen.

$R^4$ bezeichnet bevorzugt einen aliphatischen oder einen aromatischen Kohlenwasserstoffrest, die 4-23 C-Atome aufweisen können und, z.B. durch -OH, -COOH, = O, Halogen (Chlor), substituiert sein können. Der aliphatische Rest kann acyclisch oder cyclisch, gesättigt oder ungesättigt sein, der ungesättigte Rest enthält bevorzugt 1-3 Doppelbindungen. Beim aromatischen Rest handelt es sich bevorzugt um einen Phenylrest.

$R^6$ bezeichnet bevorzugt einen aliphatischen oder einen aromatischen Kohlenwasserstoffrest, die 1-16 C-Atome aufweisen können und, z.B. durch -OH, = O, Halogen (Chlor), substituiert sein können. Der aliphatische Rest enthält bevorzugt 1-3 Doppelbindungen. Beim aromatischen Rest handelt es sich bevorzugt um einen Phenylrest.

Die Farbstoffe $F(Y'H)_n$, von denen sich F ableitet, können den verschiedensten Farbstoffklassen angehören, beispielsweise der Triarylmethan-, Oxazin-, Thiazin-, Nitro-, Anthrachinon-, Cumarin-, Chinophthalon-, Benzodifuranon-, Perylen-, Naphthalimid-, insbesondere aber der Azo-(Monoazo-), Phthalocyanin- oder Methinreihe.

Die Farbstoffe der Formel I wurden in einer typischen Ausführungsform hergestellt durch Umsetzung von

1. 3-70 Gew.-%, bevorzugt 3-55 Gew.-%, besonders bevorzugt 20 bis 40 Gew.-% eines organischen Farbstoffs der Formel $F(Y'H)_n$ mit
2. 97-30 Gew.-%, bevorzugt 97-45 Gew.-%, besonders bevorzugt 80-60 Gew.-% einer NCO-funktionellen Verbindung.

Das NCO-funktionelle Harz (2) soll dabei bevorzugt auf folgenden Komponenten aufgebaut werden:

($\alpha$) 8-35 Gew.-%, besonders bevorzugt 10-25 Gew.-%, eines oder mehrerer Polyalkohole mit 2-6 Hydroxygruppen,

($\beta$) 15-80 Gew.-%, besonders bevorzugt 25-70 Gew.-% einer Monocarbonsäure oder eines Monocarbonsäuregemisches ausgewählt aus den Gruppen a) der im wesentlichen ungesättigten natürlichen oder isomerisierten natürlichen Fettsäuregemische, b) der im wesentlichen gesättigten natürlichen Fettsäuren oder c) den synthetischen aliphatischen, geradkettigen oder verzweigten Fettsäuren, d) der monocyclischen, cycloaliphatischen Monocarbonsäuren, e) den polycyclischen, gegebenenfalls ungesättigten natürlichen (terpenoiden) oder aus diesen durch Isomerisierung, Hydrierung oder partielle Dehydrierung gewonnenen Harzsäuren, sowie f) der aromatischen, gegebenenfalls alkylsubstituierten $C_{6-14}$-Monocarbonsäuren.

($\gamma$) 0 bis 50 Gew.-%, besonders bevorzugt 0 bis 35 Gew.-% einer (oder mehrerer) aliphatischen, cycloaliphatischen oder aromatischen Dicarbonsäure(n) oder ihrer veresterbaren Derivate.

($\delta$) 0 bis 50 Gew.-%, besonders bevorzugt 0 bis 35 Gew.-% eines (oder mehrerer) aliphatischen, cycloaliphatischen oder aromatischen Diisocyanats (e), wobei im wesentlichen beide NCO-Gruppen umgesetzt werden und

($\epsilon$) 9 bis 75 Gew.-%, besonders bevorzugt 20 bis 60 Gew.-% eines (oder mehrerer) aliphatischen, cycloaliphatischen oder aromatischen Diisocyanate (e), wobei solche Diisocyanate mit zwei NCO-Gruppen unterschiedlicher Reaktivität ganz besonders bevorzugt sind, mit der Maßgabe, daß die Summe aus ($\alpha$), ($\beta$), ($\gamma$), ($\delta$) und ($\epsilon$) 100 % beträgt und die Isocyanate der Komponente ($\epsilon$) in der Hauptsache durchschnittlich mit nur einer ihrer NCO-Gruppen reagieren und die zweite, gegebenenfalls weniger reaktive, im wesentlichen unumgesetzt bleibt.

Die Umsetzung der Komponenten ($\alpha$) bis ($\epsilon$) zum NCO-funktionellen Harz (2) wird dabei vorteilhaft so durchgeführt, daß zunächst ($\alpha$) mit ($\beta$), ($\gamma$) und ($\delta$) zu einem OH-funktionellen Praekondensat umgesetzt werden, welches anschließend mit ($\epsilon$) zum Harz (2) umgesetzt wird. Sollen Produkte aus natürlichen Fettsäuren - ($\beta$), Gruppen a) und b) - hergestellt werden, so kann es vorteilhaft sein, diese Fettsäuren in Form der in der Natur vorkommenden Öle (Triglyceride) einzusetzen und die Öle mit Polyalkoholen ($\alpha$) nach den bekannten Verfahren zu hydroxyfunktionellen Partialesterzwischenprodukten umzuestern, welche dann mit ($\gamma$), ($\delta$) und ($\delta$), gegebenenfalls auch direkt mit ($\epsilon$) zum Harz (2) umgesetzt werden können.

Beispiele für geeignete Polyalkohole (Komponente $\alpha$)), die den Rest $R^3$ enthalten, sind:
Ethylenglykol, 1,2-Propylenglykol, 1,3-Propandiol, 1,2-Butylenglykol, 2,3-Butylenglykol, 1,3-Butandiol, 1,4-Butandiol, 1,6-Hexandiol, Diethylenglkyol, Triethylenglykol, Glycerin, Trimethylolethan, Trimethylolpropan, Pentaerythrit, 2,2,2',2'-Tetramethylol-di-n-butylether, Diphentaerythrit, Diglycerin, Zuckeralkohole wie Xylit, Mannit, Sorbit, wobei zu berücksichtigen ist, daß diese Alkohole bei der Veresterung mit Carbonsäuren durch Bildung cyclischer innerer Ether ihre durchschnittliche effektive Funktionalität um etwa 2 verringern.

Beispiele für Monocarbonsäuren $R^4$-COOH (Komponente $\beta$)) sind aus der Gruppe a) der trocknenden

und halbtrocknenden natürlichen bzw. aus den natürlichen durch Isomerisierung gewonnenen Fettsäuren: Leinölfettsäure, Sojaölfettsäure, Baumwollsaatölfettsäure, Erdnußölfettsäure, (Kon)Juvandolfettsäure, Ricinensäure (aus natürlichem Ricinusöl bzw. Ricinolsäure durch Dehydratisierung gewonnen), Oiticicaölfettsäure, Tallölfettsäure, Safflorölfettsäure.

Ein Beispiel für Monocarbonsäuren ($\beta$) $R^4$-COOH aus der Gruppe b) der im wesentlichen gesättigten natürlichen Fettsäuren ist Kokosfettsäure. Auch die aus den natürlichen Fettsäuregemischen z.B. durch Fraktionierung gewonnenen Fettsäureschnitte, die hauptsächlich $C_{22}$-Monocarbonsäure (Behensäure), $C_{18}$-Monocarbonsäure (Stearinsäure) oder $C_{16}$-Monocarbonsäure (Palmitinsäure) neben Säuren höherer oder niederer C-Zahl enthalten, sollen hier beispielhaft genannt werden.

Beispiele für Monocarbonsäuren ($\beta$) $R^4$-COOH aus der Gruppe c) der synthetischen gesättigten Fettsäuren sind Isooctansäure, Isononansäure und Isotridecansäure.

Typische Monocarbonsäuren ($\beta$) $R^4$-COOH sind aus der Gruppe d) der cycloaliphatischen, gegebenenfalls olefinisch ungesättigten Monocarbonsäuren, die $C_6$- bzw. $C_7$-Carbonsäuren Cyclopentancarbonsäure, Cyclohexancarbonsäure, 1,4,5,6-Tetrahydrobenzoesäure.

Beispiele für Monocarbonsäuren ($\beta$) $R^4$-COOH aus der Gruppe e) der gegebenenfalls substituierten aromatischen Monocarbonsäuren sind Benzoesäure, 3-Methylbenzoesäure, 4-Methylbenzoesäure, 4-tert.-Butylbenzoesäure, 4-Chlorbenzoesäure, Anissäure.

Beispiele für Monocarbonsäuren ($\beta$) $R^4$-COOH aus der Gruppe f) der Harzsäuren bzw. Kolophoniumabkömmlinge sind Abietinsäure, Deheydroabietinsäure, Neoabietinsäure, Pimarsäure, Isopimarsäure, Lävopimarsäure usw.

Beispiele für geeignete Dicarbonsäuren ($\gamma$) entsprechend HOOC-$R^6$-COOH bzw. deren veresterbare Derivate sind Bernsteinsäure(ahydrid), Glutarsäure(anhydrid), Adipinsäure, Pimelinsäure, Azelainsäure, Suberinsäure, Sebacinsäure, Dodecandisäure, Cyclohexan-1,2,dicarbonsäure(anhdrid), 1,2,3,6-Tetrahydrophthalsäure(anhydrid), Phthalsäure(anhydrid), Isophthalsäure. Mögliche, aber weniger bevorzugte Beispiele sind ungesättigte aliphatische Säuren wie Fumarsäure, Maleinsäure(anhydrid), Itaconsäure.

Für den Fall, daß die erfindungsgemäße Druckfarbe ein Farbmittel(gemisch) und gegebenenfalls ein oder mehrere Zusatzstoffe, jedoch keinen Firnis enthält, handelt es sich bei dem Farbmittel der Formel II um ein farbstoffmodifiziertes Harz, d.h. der Farbstoff ist in den Firnis chemisch eingebaut.

Vorzugsweise enthalten die erfindungsgemäßen Druckfarben jedoch das Farbmittel der Formel II in Abmischung mit einem Firnis. Der Firnis enthält z.B. Alkydharze, Urethanalkyde, Hartharze, Leinölstandöle und Mineralöle, die zusammengemischt oder verkocht werden können.

Die erfindungsgemäßen Druckfarben können in bekannter Weise für den Druck verwendet werden.

Die Offsetdruckfarben können nach den üblichen Verfahren für den Bogen- und Rollen-, bevorzugt auch für den heat-set-Offsetdruck eingesetzt werden. Es ist dabei möglich, Vierfarbdrucke mit geeigneten Schwarzpigmenten (Ruß) und den drei Farbtönen der Trichromie herzustellen, bei denen alle drei Farbtöne (Magenta, Cyan, Gelb) mittels der erfindungsgemäß eingesetzten Farbstoffe erzeugt werden. Ebenso ist es aber möglich, nur zwei Farbtöne, bevorzugt Gelb und Magenta, mit den erfindungsgemäß verwendeten Farbstoffen einzustellen. Schließlich ist es auch möglich, für einen oder mehrere Farbtöne, Druckfarbpigmente und die erfindungsgemäß eingesetzten Farbstoffe nebeneinander zu verwenden.

Die gemeinsame Anwendung von Farbstoffen gemäß der vorliegenden Erfindung und Pigmenten in Druckfarben kann z.B. dann vorteilhaft sein, wenn es darum geht, einen besonders homogenen Flächendruck zu erzielen, eine Druckfarbe zu nuancieren, einen Pigmentdruck hinsichtlich seiner Brillanz zu verbessern, die Lasur eines Pigmentdrucks zu steigern, im Vierfarbdruck die Eigenschaften von Ruß hinsichtlich Brillanz und Glanz und Transparenz zu verbessern oder die Rheologie herkömmlicher Bogen- oder Rollen Offsetdruckfarben zu verbessern.

Da volle Verträglichkeit mit den herkömmlichen Buch- und Offsetdruckfarben auf Pigmentbasis besteht, kann die Zugabe der erfindungsgemäßen einsetzbaren Farbmittel der Formel II in jedem beliebigen Verhältnis erfolgen.

Die Erfindung betrifft demzufolge auch Druckfarben, insbesondere Buch- und Offsetdruckfarben enthaltend ein Farbmittel(gemisch), gegebenenfalls einen Firnis sowie gegebenenfalls einen oder mehrere Zusatzstoffe, wie Sikkative, Hautverhinderungsmittel, und Verlaufmittel, dadurch gekennzeichnet, daß das Farbmittel(gemisch) zusätzlich zu einen Pigment oder Ruß mindestens einen Farbstoff der Formel I enthält.

Im folgenden weren einige zur Herstellung von Farbmitteln der Formel II vorzugsweise verwendbare Farbstofftypen der Formel $F(Y'H)_n$ beispielhaft aufgeführt.

A. Pyridonazofarbstoffe mit 1-4 Hydroxygruppen der Formel

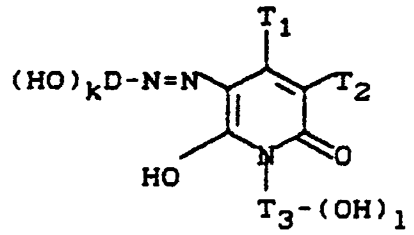

V

in der

D den Rest eine Diazokomponente,

$T_1$ Alkyl, Aryl, $-COOT_4$,

$T_2$ H, -CN, $-COOT_4$, $-CONH-T_5(OH)_1$

$T_3$ aliphatische oder araliphatische Reste, die durch ein oder mehrere Sauerstoffatome unterbrochen sein können,

$T_4$ Wasserstoff, Alkyl,

$T_5$ aliphatische oder araliphatische Reste, die durch ein oder mehrere Sauerstoffatome unterbrochen sein können,

k,1 0, 1, 2, 3 oder 4, mit der Maßgabe, daß die Summe aus k + l 1, 2, 3 oder 4 beträgt, bezeichnen.

D steht vorzugsweise für einen Phenylrest, der 1-4 Substituenten aus der Reihe gegebenenfalls substituiertes $C_1$-$C_{12}$-Alkyl, $C_2$-$C_{12}$-Alkenyl, Cyclohexyl, Cyclopentyl, Cyclohexenyl, Halogen wie Cl, Br, F, $C_1$-$C_6$-Alkoxy, gegebenenfalls substituiertes Phenoxy, -CN, $-CF_3$, $-NO_2$, gegebenenfalls substituiertes $C_1$-$C_{18}$-Alkylsulfonyl, gegebenenfalls substituiertes Phenylsulfonyl, gegebenenfalls substituiertes Benzylsulfonyl, gegebenenfalls substituiertes Phenoxysulfonyl, gegebenenfalls substituiertes Carbamoyl, gegebenenfalls substituiertes Sulfamoyl tragen kann.

Die Alkylreste in $C_1$-$C_{12}$-Alkyl und $C_1$-$C_{18}$-Alkylsulfonyl können z.B. durch -OH, $C_1$-$C_6$-Alkoxy oder -CN substituiert sein. Die Phenylreste in Phenoxy, Phenylsulfonyl, Phenoxysulfonyl und Benzylsulfonyl können z.B. durch $C_1$-$C_4$-Alkyl oder Halogen wie Cl und Br substituiert sein.

Die Carbamoylgruppen tragen vorzugsweise zwei gleiche oder verschiedene Substituenten aus der Reihe $C_1$-$C_{18}$-Alkyl, die z.B. durch -OH substituiert sein können, $C_2$-$C_{18}$-Alkenyl, Aryloxyalkyl, $C_9$-$C_{11}$-Aralkoxyalkyl, $C_7$-$C_{11}$-Aralkyl, $C_4$-$C_{13}$-Acyloxyalkyl, $C_6$-$C_{14}$-Alkoxycarbonyloxyalkyl, $C_6$-$C_{12}$-Alkylaminocarbonyloxyalkyl, $C_4$-$C_9$-Dialkylaminoalkyl, entsprechende Diazokomponenten sind aus der DE-A-1 311 648 bekannt.

Die Sulfamoylgruppen tragen bevorzugt 1 oder 2 Substituenten aus der Reihe $C_1$-$C_{18}$-Alkyl, gegebenenfalls durch O unterbrochenes und gegebenenfalls durch Hydroxy oder Phenoxy substituiertes $C_1$-$C_{12}$-Alkyl oder $C_7$-$C_{11}$-Aralkyl; entsprechende Diazokomponenten sind aus der EP-A 1 18 567 bekannt.

Als Beispiele für Diazokomponenten seien genannt:

Anilin, o-, m- und p-Toluidin, o- und p-Ethylanilin, 2,3-Dimethylanilin, 3,4-Dimethylanilin, 2,4-Dimethylanilin, 2,5-Dimethylanilin, o-i-Propylanilin, p-i-Propylanilin, 2,4,5- und 2,3,5-Trimethylanilin, 2-Methyl-5-i-propylanilin, 4-tert.-Butylanilin, 4-sec.-Butylanilin, Anilin, das durch geradkettiges oder verzweigtes $C_{12}$-$C_{25}$-Alkyl o- oder p-ständig substituiert ist, 4-Cyclohexylanilin, 4-Cyclohexyl-2-methylanilin, 4-(1-Cyclohexen-1-yl)-anilin, o-, m- und p-Chloranilin, 2,3-, 2,4-, 2,5- und 3,4-Dichloranilin, 5-Chlor-2-methylanilin, 4-Chlor-2-methylanilin, 3-Chlor-2-methylanilin, 2-Chlor-5-methylanilin, 4-Chlor-3-methylanilin, 3-Chlor-4-methylanilin, 2-Chlor-3,4-dimethylanilin, 5-Chlor-2,4-dimethylanilin, 4-Chlor-2,5-dimethylanilin, o-, m- und p-Nitroanilin, 2-Chlor-4-nitroanilin, 2-Nitro-4-chloranilin, 2-Methyl-4-nitroanilin, 4-Methyl-2-nitroanilin, 2,4-Dimethyl-5-nitroanilin, 2,5-Dimethyl-4-nitroanilin, 4-i-Propyl-2-nitroanilin, 4-tert.-Butyl-2-nitroanilin, 4-Cyclohexyl-2-nitroanilin, o-, m- und p-Methoxyanilin, 2-Ethoxy- und 4-Ethoxyanilin, 2-Phenoxyanilin, 2-(2-Methylphenoxy)-anilin, 5-Chlor-2-methoxyanilin, 5-Chlor-2-phenoxyanilin, 5-Chlor-2-(4-chlorphenoxy)-anilin, 4,5-Dichlor-2-methoxyanilin, 2-Methoxy-5-nitroanilin, 2-Methoxy-4-nitroanilin, 3-Chlor-4-methoxyanilin, 4-Methoxy-2-nitroanilin, 4-Ethoxy-2-nitroanilin, 4-Ethoxy-3-nitroanilin, 3-Methoxy-4-methylanilin, 4-Methoxy-2-methylanilin, 2-Methoxy-5-methylanilin, 2-Ethoxy-5-methylanilin, 4-Chlor-2-methoxy-5-methylanilin, 4-Chlor-2,5-dimethoxyanilin, 2,5-Dimethoxy-4-nitroanilin, 2-(Phenylsulfonyl)-anilin, 2-(Methylsulfonyl)-4-nitroanilin, 2-Methoxy-5-(phenylsulfonyl)-anilin, 5-(Benzylsulfonyl)-2-methoxyanilin, 5-(Ethylsulfonyl)-2-methoxyanilin.

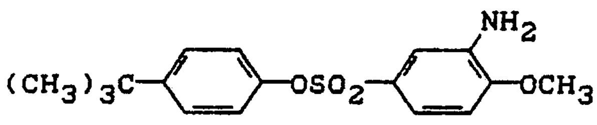

,

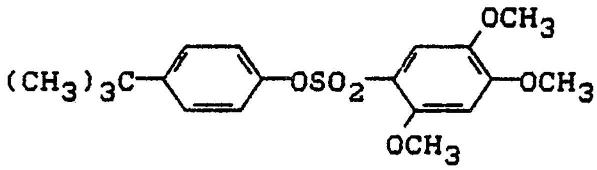

.

Für den Fall, das k in Formel (V) > O ist, d.h. die Diazokomponente 1-4 Hydroxygruppen aufweist, steht D vorzugsweise für einen Phenylrest, der durch Hydroxy-$C_1$-$C_{18}$-alkoxy, $-NO_2$, -CN, F, Cl, Br, $C_1$-$C_4$-Alkyl substituiert sein kann, oder durch einen Rest der Formeln

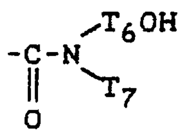

,

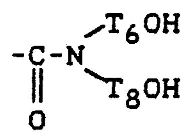

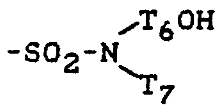

,

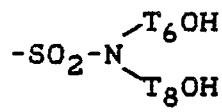

wobei

$T_6$, $T_8$ aliphatische Reste, die durch ein oder mehrere O-Atome unterbrochen sein können und

$T_7$ Wasserstoff oder aliphatische oder araliphatische Reste, die durch ein oder mehrere O-Atome unterbrochen sein können, bezeichnen.

Ebensogut können Farbstoffe verwendet werden, die zusammen mit den zur Formel V angegebenen Diazokomponenten Kupplungskomponenten aus der Pyrimidon-, Pyrazolon-, Aminopyrazol- oder Indol-Reihe enthalten.

B. Aminoazobenzol-Farbstoffe der Formel

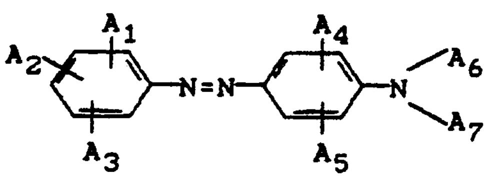

(VI)

in der

$A_1$, $A_2$, $A_3$ Wasserstoff, Halogen, wie Cl, Br, F, -CN, $-NO_2$, $C_1$-$C_6$-Alkyl, Methoxy und Ethoxy, gegebenenfalls substituiertes Phenoxy, gegebenenfalls substituiertes $C_1$-$C_{18}$-Alkylsulfonyl, gegebenenfalls substituiertes Phenylsulfonyl, gegebenenfalls substituiertes Sulfamoyl, gegebenenfalls substituiertes Carbamoyl, gegebenenfalls substituiertes Phenylazo, $C_1$-$C_6$-Alkoxycarbonyl, $-CF_3$, -SCN, $C_1$-$C_{12}$-Alkylmercapto, $C_1$-$C_6$-Alkylcarbonyl, gegebenenfalls substituiertes Phenylcarbonyl, -OH,

$A_4$, $A_5$ Wasserstoff, Halogen, wie Cl, Br, F, gegebenenfalls substituiertes $C_1$-$C_6$-Alkyl, insbesondere Methyl und Ethyl, gegebenenfalls substituiertes $C_1$-$C_6$-Alkoxy, insbesondere Methoxy und Ethoxy, gegebenenfalls substituiertes $-NH-CO-C_1$-$C_6$-Alkyl, insbesondere $-NH-CO-CH_3$ und $-NH-CO-C_2-H_5$,gegebenenfalls substituiertes $-NH-SO_2-C_1$-$C_6$-Alkyl, insbesondere $-NH-SO_2-CH_3$ und $-NH-SO_2-C_2H_5$,

$A_6$, $A_7$ unabhängig voneinander Wasserstoff, gegebenenfalls substituiertes $C_1$-$C_{12}$-Alkyl oder $C_3$-$C_{12}$-Cycloalkyl, z.B. mit -OH, $-NH_2$, -CN substituiert, oder Reste der Formeln

$-CH_2-CH_2-O)_{1-4}-H$

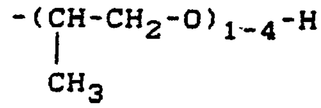

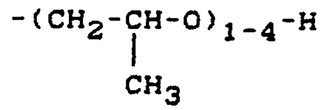

bezeichnen, mit der Maßgabe, daß der Farbstoff mindestens einen mit einem Isocyanat umsetzbaren Substituenten besitzt.

Folgende Verbindungen gemäß Formel VI werden bevorzugt eingesetzt:

1. Verbindungen, bei denen

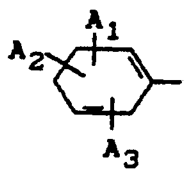 für 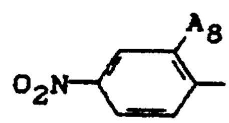 ,

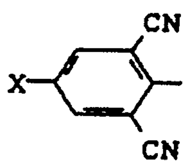 , 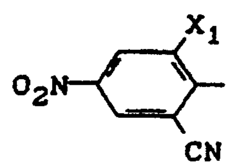 oder

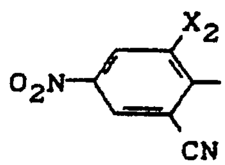

steht, wobei $A_8$ Cl, Br, CN,

X H, $CH_3$, $C_2H_5$, $C_6H_{12}$, tert.-Butyl, $C_1$-$C_4$-Alkoxy, Cl, Br,

$X_1$ $-NO_2$, -CN, $-CF_3$, $C_1$-$C_{12}$-Alkylsulfonyl und

$X_2$ $-NO_2$, -CN bezeichnen.

2. Verbindungen, bei denen

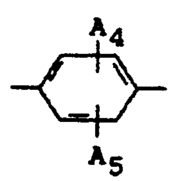 für 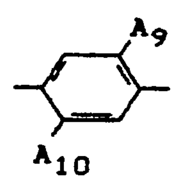

steht, wobei

$A_9$ Wasserstoff, Chlor, $C_1$-$C_4$-Alkyl, insbesondere Methyl und Ethyl, und $C_1$-$C_4$-Alkoxy, insbesondere Methoxy und Ethoxy, bezeichnet und

$A_{10}$ für Wasserstoff, Halogen, wie Cl, Br, F, gegebenenfalls substituiertes $C_1$-$C_6$-Alkyl, insbesondere Methyl und Ethyl, gegebenenfalls substituiertes Alkoxy, insbesondere Methoxy und Ethoxy, gegebenenfalls substituiertes -NH-CO-$C_1$-$C_6$-Alkyl, insbesondere $-NH-CO-CH_3$ und $-NH-CO-C_2H_5$, gegebenenfalls substituiertes $-NH-SO_2$-$C_1$-$C_6$-Alkyl, insbesondere $-NH-SO_2-CH_3$ und $-NH-SO_2-C_2H_5$ steht.

Ebensogut können Farbstoffe der Formel

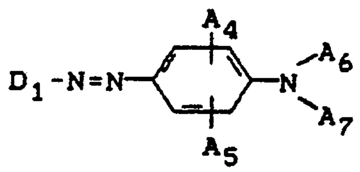

VII

verwendet werden, in der
$D_1$ den Rest einer Diazokomponente aus der Thiophen-, Thiazol-, Thiadiazol-, Benzthiazol- oder Benzisothiazol-Reihe bezeichnet.

C. Methinfarbstoffe der Formel

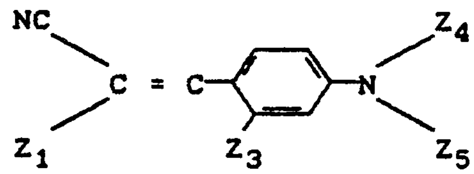

VIII

in der

- $Z_1$ -CN, $-COOCH_3$, $-COOC_2H_5$, $-COOC_2H_4OH$, $-SO_2CH_3$, $-SO_2C_2H_5$, $-SO_2C_2H_4OH$,
- $Z_2$ H, CN,
- $Z_3$ $C_1$-$C_6$-Alkyl,
- $Z_4$ $C_1$-$C_6$-Alkyl, Hydroxy-$C_1$-$C_6$-alkyl, Phenyl, Benzyl und
- $Z_5$ Hydroxy-$C_1$-$C_6$-alkyl

bezeichnen.

D. Kupferphthalocyaninfarbstoffe der Formel

$CuPc(SO_2NX_3X_4)_{1-6}$ IX

worin

- $X_3$ Wasserstoff, $C_1$-$C_6$-Alkyl, Hydroxy-$C_1$-$C_6$-alkyl, Amino-$C_1$-$C_6$-alkyl und
- $X_4$ Hydroxy-$C_1$-$C_6$-alkyl und Amino-$C_1$-$C_6$-alkyl bezeichnen.

E. Rhodaminfarbstoffe der Formel

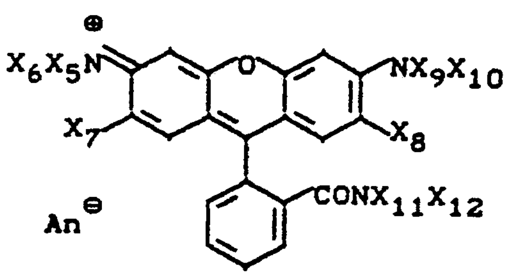

X

in der

- $X_5$, $X_7$, $X_8$, $X_9$ Wasserstoff, gegebenenfalls durch Hydroxy substituiertes $C_1$-$C_6$-Alkyl,
- $X_6$, $X_{10}$ gegebenenfalls durch Hydroxy substituiertes $C_1$-$C_6$-Alkyl,
- $X_{11}$ Wasserstoff, gegebenenfalls durch Hydroxy substituiertes $C_1$-$C_6$-Alkyl,
- $X_{12}$ Hydroxy-$C_1$-$C_6$-alkyl und
- $An^\ominus$ ein Anion bezeichnen.

Individuelle Beispiele für Farbstoffe der Formel $F(Y'H)_n$ sind:

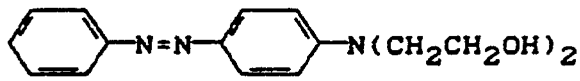

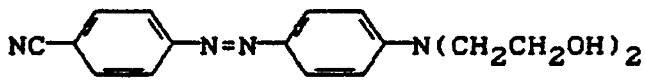

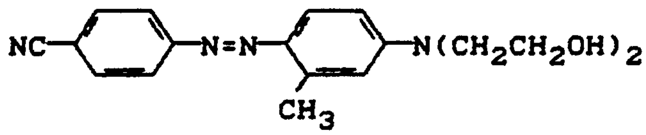

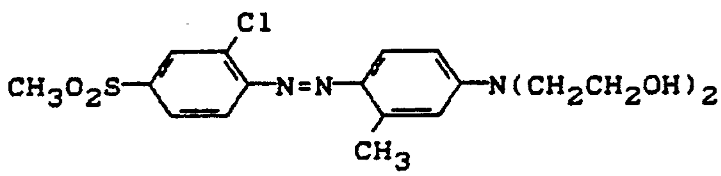

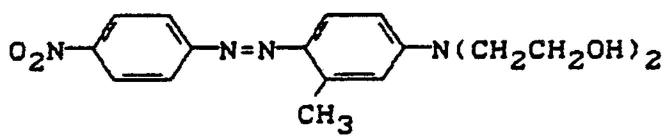

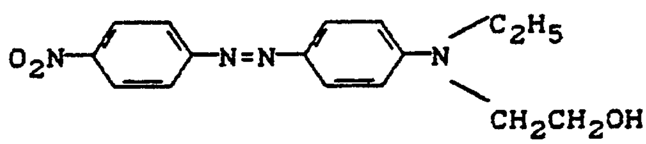

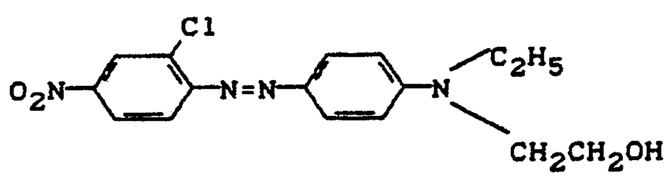

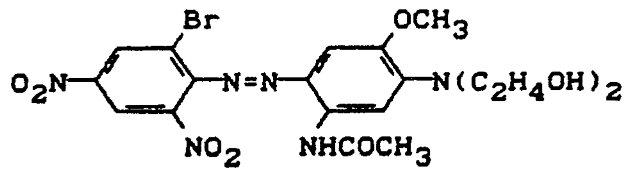

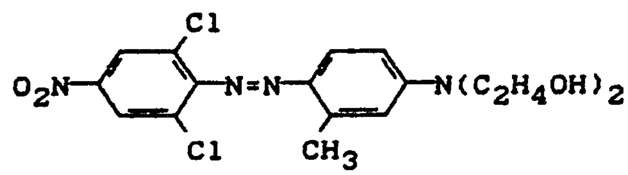

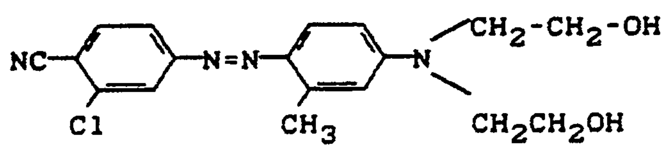

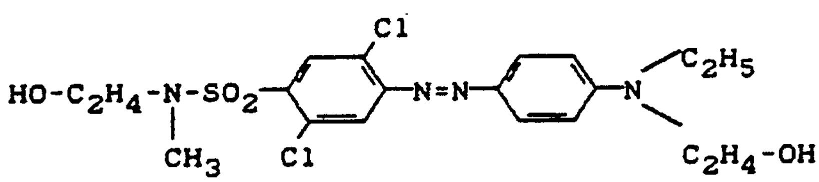

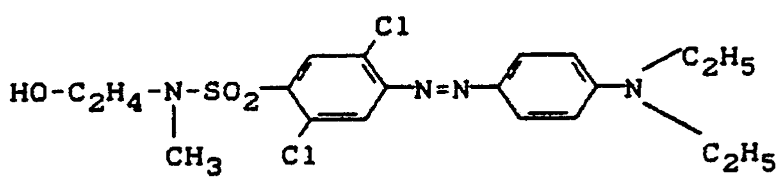

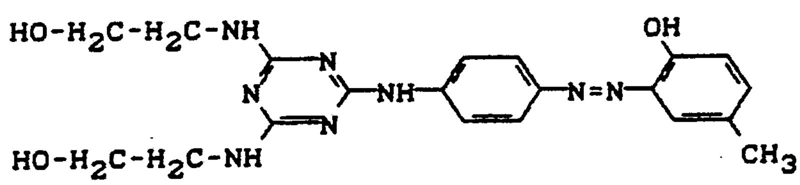

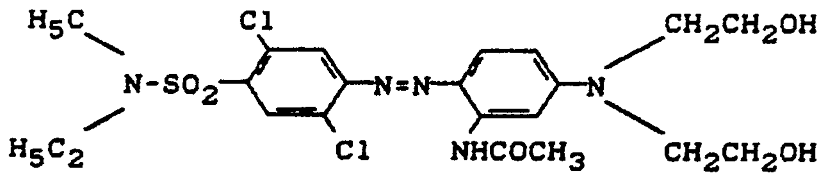

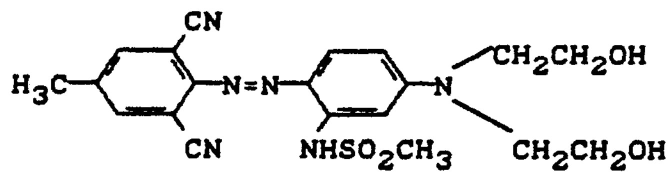

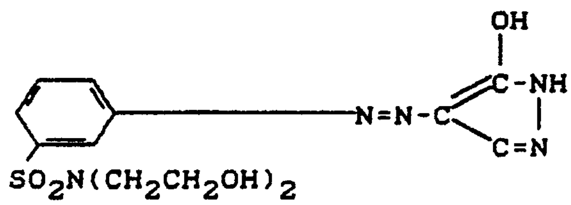

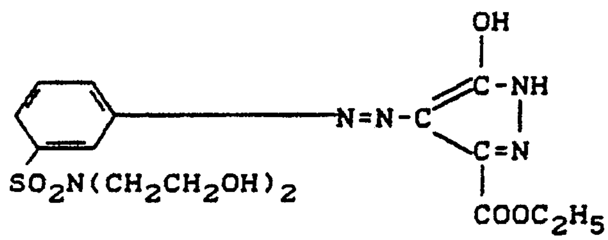

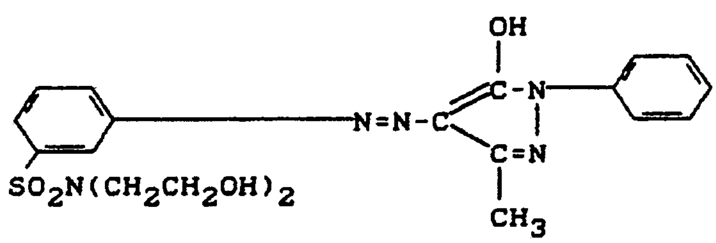

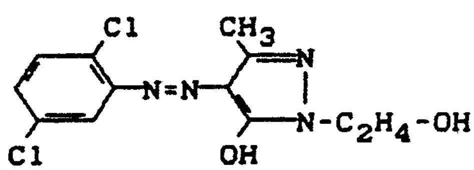

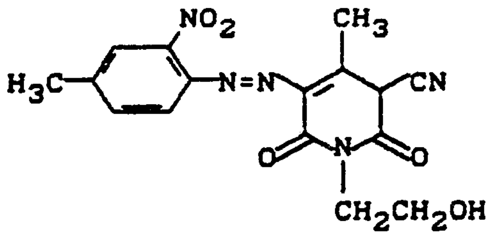

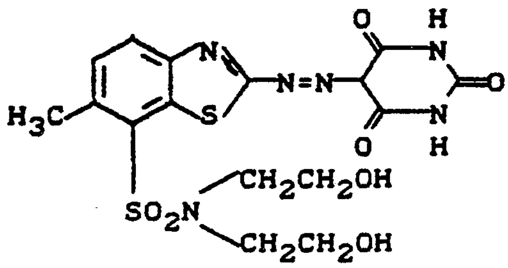

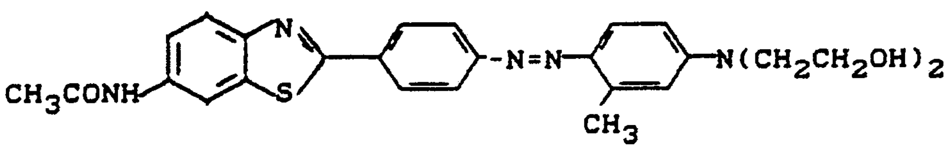

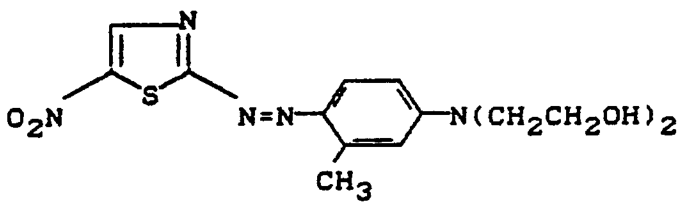

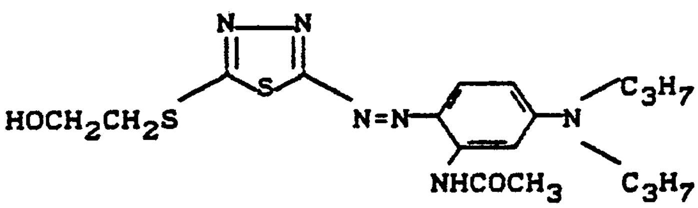

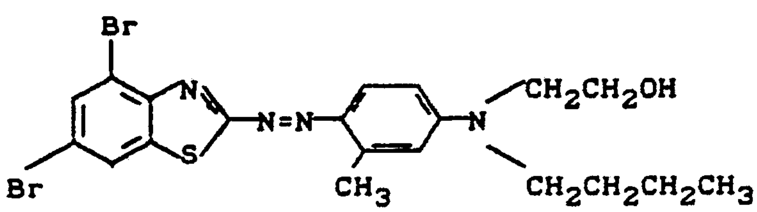

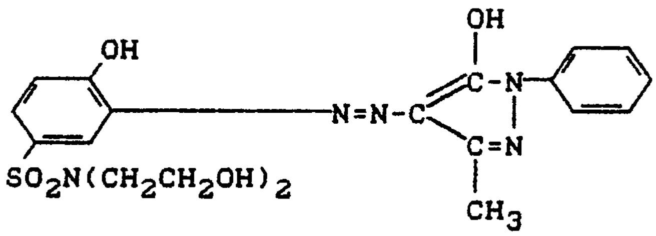

Komplexe Chromverbindungen aus 1 Atom Cr und 2 Mol des Farbstoffs der Formel

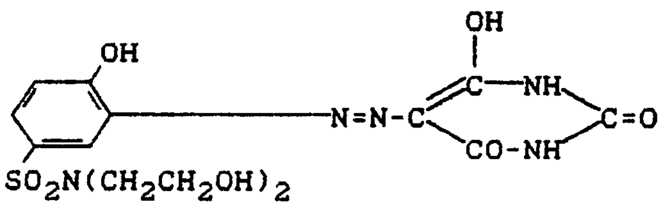

Komplexe Chromverbindung aus 1 Atom Cr und 2 Mol des Farbstoffs der Formel

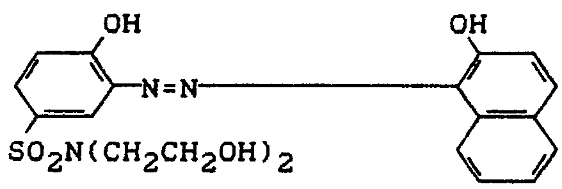

Komplexe Kobaltverbindung aus 1 Atom Co und 2 Mol des vorstehend genannten Farbstoffs.

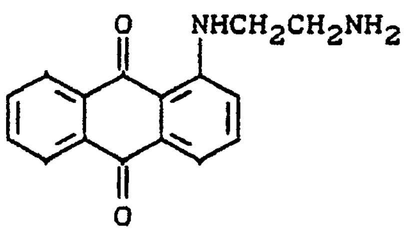

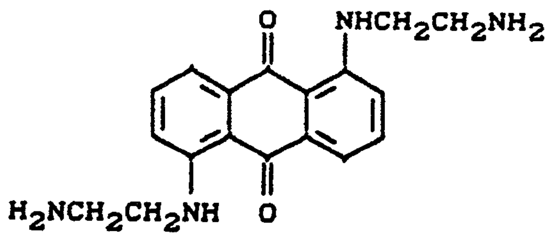

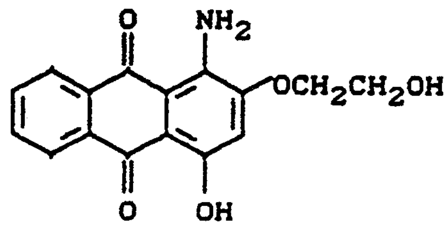

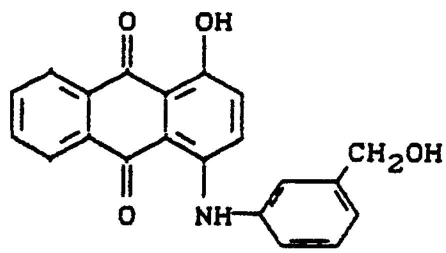

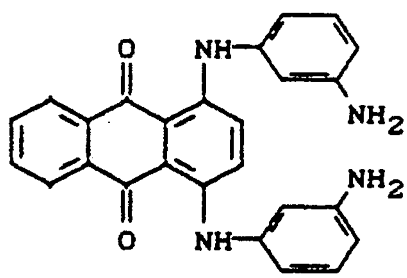

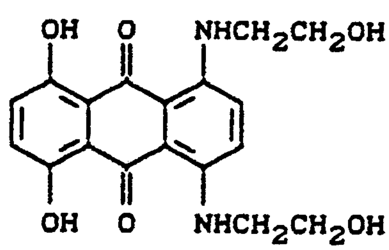

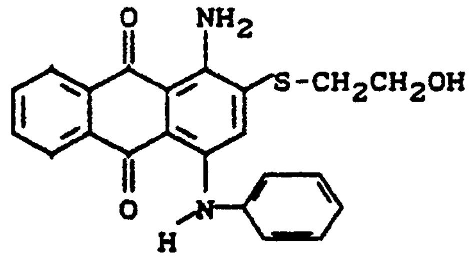

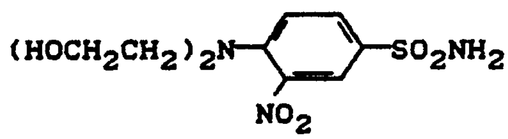

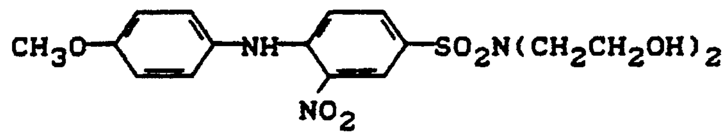

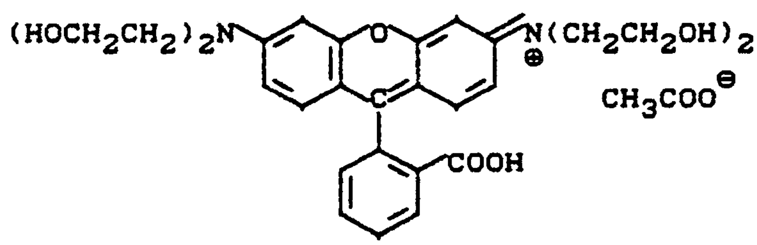

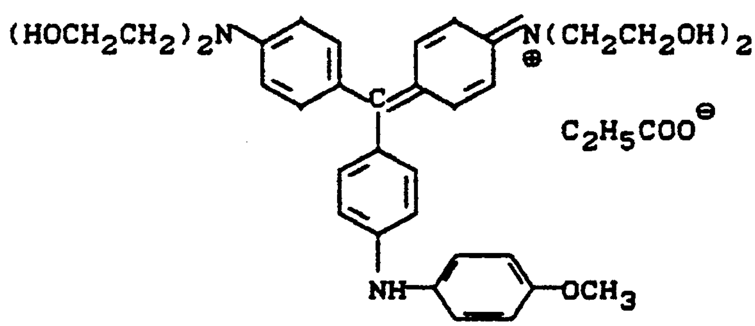

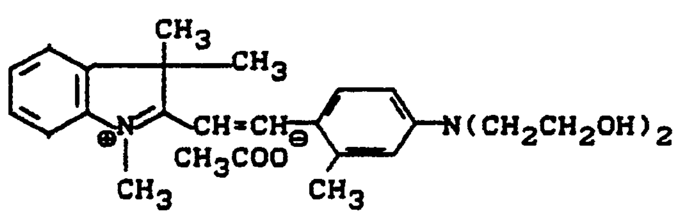

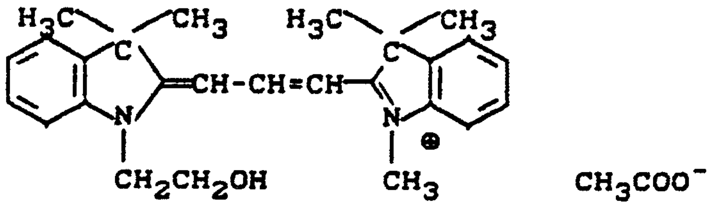

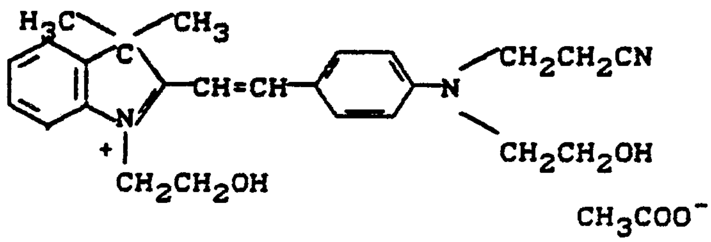

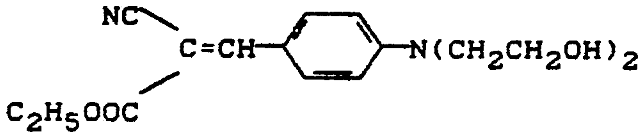

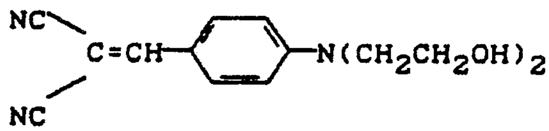

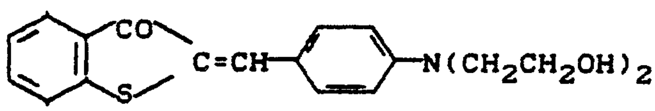

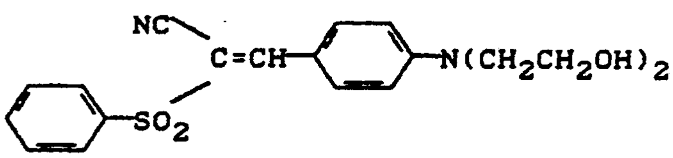

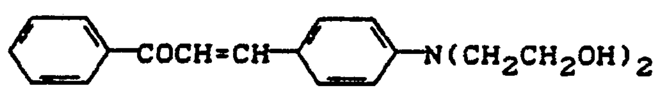

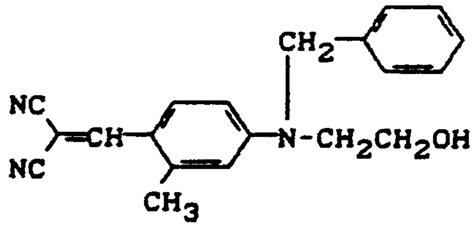

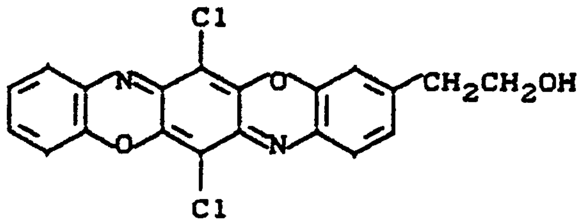

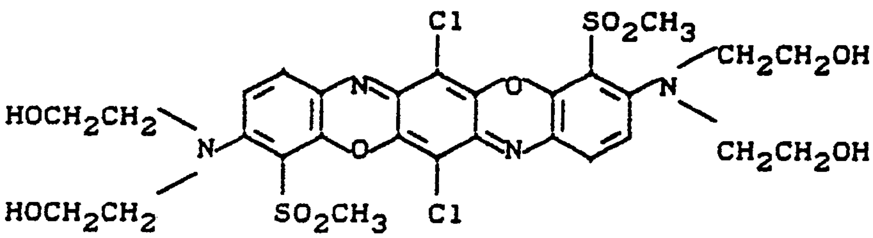

Die erfindungsgemäßen Farbmittel, insbesondere Druckfarben wie Offsetdruckfarben zeigen im Gegensatz zu bekannten Druckfarben, die keine Verbindungen (A) enthalten überraschenderweise überhaupt kein oder stark verringertes "Aufbauen" der Druckfarbe auf den Walzen, sodaß störungsfrei hohe Auflagen gedruckt werden können.

Beispiele (Teile sind Gewichtsteile, % sind Gew.-%)

1. Herstellungsbeispiel für das Farbmittel

(entsprechend EP 271 781)

1a) Stufe 1: OH-funktionelles Vorprodukt

544 Tle Pentaerythrit und 3360 Tle Sojaölfettsäure wurden unter Durchleiten von Stickstoff in 1 h auf 140° C, dann in 8 h auf 220° C erhitzt, wobei das Reaktionswasser abdestilliert wurde. Nach 11 h bei 220° C betrug die Säurezahl < 1 mg KOH/g; die OH-Zahl 58,5 mg KOH/g.

1b) Stufe 2: NCO-funktionelles Vorprodukt

479,5 Tle das Vorproduktes 1a) und 87 Tle. 2,4-Diisocyanatotoluol wurden unter $N_2$ 1 h bei 80° C miteinander umgesetzt. Der Gehalt an freien Isocyanatgruppen betrug dann 3,6 %.

1c) Stufe 3: Farbmittel

177,5 Tle des Vorproduktes 1b), 51,4 Tle des gelben Azofarbstoffs der Formel

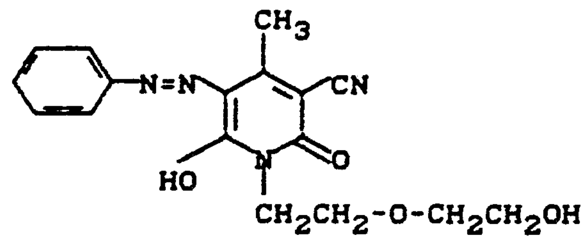

und 0,23 Tle Dibutylzinndilaurat werden unter $N_2$ 12 h bei 120°C miteinander umgesetzt. Der vorher fein verteilte, ungelöste Farbstoff geht dabei in der zunehmend homogeneren Schmelze in Lösung. Das fertige Produkt ist eine klare, glasartige bis leicht klebende, homogene Masse.

2. Herstellungsbeispiel für das Farbmittel

(entsprechend EP 271 781)

2a) Stufe 1: OH-funktionelles Vorprodukt

816 Tle Pentaerythrit, 2134 Tle Stearinsäure und 1251 Tle Leinölfettsäure wurden unter Durchleiten von Stickstoff in 1 h auf 140°C, dann in 8 h auf 220°C erhitzt, wobei das Reaktionswasser abdestilliert wurde. Nach 4 h bei 223°C betrug die Säurezahl 4 mg KOH/g; die OH-Zahl 160 mg KOH/g. Der Ansatz wurde auf 120°C abgekühlt und soviel entnommen, daß im Reaktionsgefäß 1136 Tle verblieben; hierzu wurden 246 Tle Tetrahydrophthalsäureanhydrid gegeben und 1 h bei 120°C gerührt. Danach betrug die Säurezahl 68 mg KOH/g und die OH-Zahl 60 mg KOH/g.

2b) Stufe 2: NCO-funktionelles Vorprodukt

431,5 Tle des Vorprodukts 2b und 104,4 Tle 2,4-Diisocyanatotoluol wurden unter $N_2$ 3 h bei 100°C miteinander umgesetzt. Der Gehalt an freien Isocyanatgruppen betrug dann 4,7 %.

2c) Stufe 3: Farbmittel

348,1 Tle des Vorprodukts 2b), 187,5 Tle des Azofarbstoffs der Formel

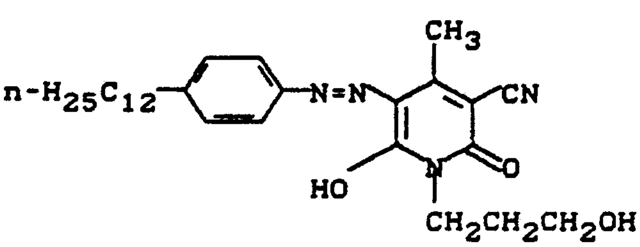

und 0,54 Tle Dibutylzinndilaurat wurden unter $N_2$ 12 h bei 120°C miteinander umgesetzt. Der fein verteilte, zunächst ungelöste Farbstoff geht dabei in der Schmelze in Lösung. Das fertige Produkt ist homogen.

3. Herstellungsbeispiel für das Farbmittel

(entsprechend EP 271 781)

1680 Tle Sojaölfettsäure und 402 Tle. Trimethylolpropan wurden unter Durchleiten von Stickstoff in 1 h auf 140°C, dann in 8 h auf 220°C erhitzt, wobei das Reaktionswasser abdestilliert wurde. Nach 4 h bei 220°C betrug die Säurezahl 4 mg KOH/g, die OH-Zahl 85 mg KOH/g.

3b) Stufe 2: NCO-funktionelles Vorprodukt

393,7 Tle des Vorprodukts 3a) und 104,4 Tle 2,4-Diisocyanatotoluol wurden unter $N_2$ 1 h bei 80°C miteinander umgesetzt. Der Gehalt an freien Isocyanatgruppen betrug dann 5,18 %.

3c) Stufe 3: Farbmittel

413,4 Tle des Vorprodukts 3b), 171,2 Tle des gelben Azofarbstoffs der Formel

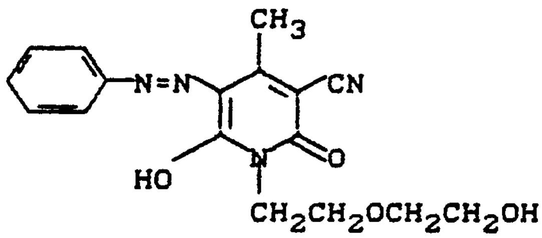

und 0,58 Tle. Dibutylzinndilaurat wurden unter $N_2$ 12 h bei 120°C miteinander umgesetzt. Das Produkt ist eine homogene, glasartige Masse.

4. Herstellungsbeispiel für das Farbmittel

(entsprechend EP 271 781)

4a) Stufe 1: OH-funktionelles Vorprodukt

680 Tle Pentaerythrit, 2800 Tle Sojaölfettsäure und 610 Tle Benzoesäure wurden unter Durchleiten von Stickstoff in 1 h auf 140°C, dann in 8 h auf 220°C erhitzt, wobei das Reaktionswasser abdestilliert wurde. Nach 13 h bei 220°C betrug die Säurezahl 5 mg KOH/g, die OH-Zahl 81 mg KOH/g.

4b) Stufe 2: NCO-funktionelles Vorprodukt

172,1 Tle des Vorprodukts 4a) und 43,5 Tle. 2,4-Diisocyanatotoluol wurden unter $N_2$ 1 h bei 80°C miteinander umgesetzt. Der Gehalt an freien Isocyanatgruppen betrug dann 4,85 %.

4c) Stufe 3: Farbmittel

138,6 Tle des Vorprodukts 4b), 54,8 g des gelben Azofarbstoffs

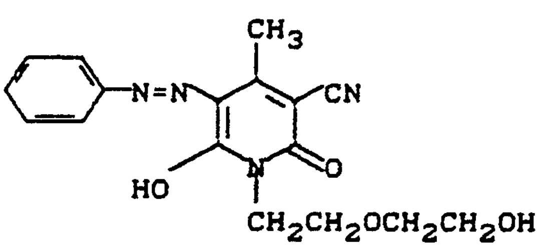

und 0,2 Tle Dibutylzinndilaurat wurden unter $N_2$ 12 h bei 120°C miteinander umgesetzt. Das Produkt ist eine homogene, glasartige Masse.

5. Herstellungsbeispiel für das Farbmittel

(entsprechend EP 271 781)

5a) Stufe 1: OH-funktionelles Vorprodukt

Es wird das gleiche Vorprodukt wie in Herstellungsbeispiel 3a) hergestellt.

5b) Stufe 2: NCO-funktionelles Vorprodukt

Es wird aus dem Vorprodukt 5a) (= 3a) das analoge NCO-funktionelle Vorprodukt wie in Herstellungsbeispiel 3b) hergestellt, NCO-Gehalt 4,92 %.

5c) Stufe 3: Farbmittel

384,1 Tle des Vorprodukts 5b), 177,9 Tle des gelben Azofarbstoffs

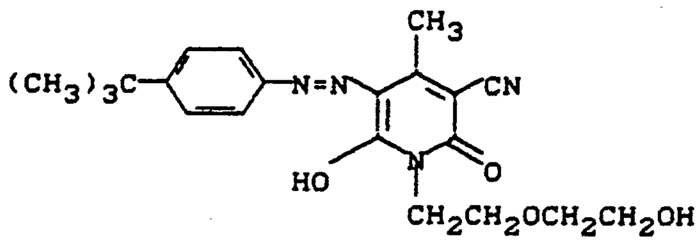

und 0,56 Tle Dibutylzinndilaurat wurden unter $N_2$ 12 h bei 120 °C miteinander umgesetzt. Das Produkt ist eine homogene, glasartige Masse.

6. Herstellungsbeispiel für das Farbmittel

(entspechend EP 271 781)

6a) Stufe 1: OH-funktionelles Vorprodukt

Es wird das gleiche Vorprodukt wie in Herstellungsbeispiel 3a) hergestellt.

6b) Stufe 2: NCO-funktionelles Vorprodukt

Es wird aus dem Vorprodukt 6a) (= 3a) das analoge NCO-funktionelle Vorprodukt wie in Herstellungsbeispiel 3b) hergestellt, NCO-Gehalt 5,00 %.

6c) Stufe 3: Farbmittel

175,8 Tle des Vorprodukts 6b), 53,5 Tle des gelben Azofarbstoffs

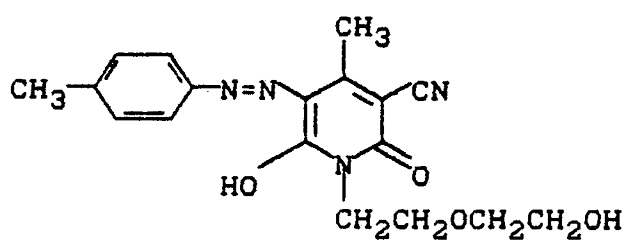

und 0,18 Tle Dibutylzinndilaurat wurden unter $N_2$ 12 h bei 120 °C umgesetzt. Das Produkt ist eine homogene, zähe Masse.

7. Herstellungsbeispiel für das Farbmittel

(entsprechend EP 271 781)

7a) Stufe 1: OH-funktionelles Vorprodukt

335 Teile Trimethylolpropan und 1120 Tle Sojaölfettsäure wurden unter Durchleiten von Stickstoff in 1 h auf 140° C, dann in 8 h auf 220° C erhitzt, wobei das Reaktionswasser abdestilliert wurde. Nach 1 h bei 220° C betrug die Säurezahl 6 mg KOH/g. Der Ansatz wurde auf 100° C abgekühlt; bei dieser Temperatur wurden 73 Tle Adipinsäure zugegeben. Danach wurde erneut auf 220° C erhitzt. Nach 4 h bei 220° C betrug die Säurezahl 5 mg KOH/g, die OH-Zahl 92 mg KOH/g.

7b) Stufe 2: NCO-funktionelles Vorprodukt

304,9 Tle des Vorprodukt 7a) und 87 Tle 2,4-Diisocyanatotoluol wurden unter $N_2$ 1,5 h bei 80° C miteinander umgesetzt. Danach betrug der Gehalt an freien NCO-Gruppen 5,1 %.

7c) Stufe 3: Farbmittel

312,9 Tle des Vorprodukts 7b), 130,1 Tle des gelben Azofarbstoffs

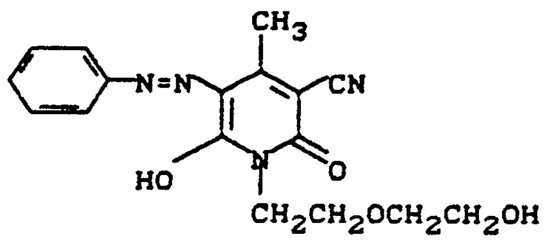

und 0,44 Tle Dibutylzinndilaurat wurden 1/2 bei 125° C, anschließend 3/4 h bei 140-145° C miteinander umgesetzt. Das fertige Produkt war bei Raumtemperatur wachsartig fest.

8. Herstellungsbeispiel für das Farbmittel

(entsprechend EP 271 781)

8a) Stufe 1: OH-funktionelles Vorprodukt

335 Tle Trimethylolpropan und 980 Tle Sojaölfettsäure wurden unter Durchleiten von Stickstoff in 1 h auf 140° C, dann in 8 h auf 220° C erhitzt, wobei das Reaktionswasser abdestilliert wurde. Nach Erreichen der Temp. von 220° C betrug die Säurezahl 6,6 mg KOH/g. Der Reaktionsansatz wurde auf 100° C abgekühlt; bei dieser Temperatur wurden 109,5 Tle Adipinsäure zugegeben. Danach wurde erneut auf 220° C erhitzt. Nach 5 h bei 220° C betrug die Säurezahl 5 mg KOH/g, die OH-Zahl 98 mg KOH/g.

8b) Stufe 2: NCO-funktionelles Vorprodukt

343,5 Tle. des Vorprodukts 8a) und 104,4 Tle 2,4-Diisocyanatotoluol wurden unter $N_2$ 1 h bei 80° C miteinander umgesetzt. Danach betrug der Gehalt an freien NCO-Gruppen 5,5 %.

8c) Stufe 3: Farbmittel

290,2 Tle des Vorprodukts 8b), 130,1 Tle. des gelben Azofarbstoffs

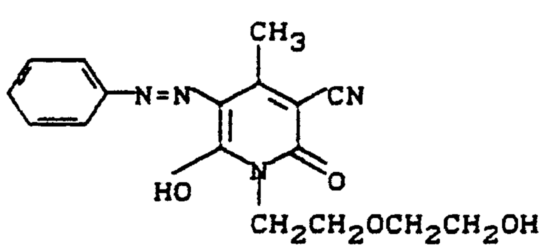

und 0,42 Tln Dibutylzinndilaurat wurden zusammen mit 42 Tln PKWF-Öl 6/9 (Mineralöl-Destillat mit dem Siedebereich 260-290 °C) als Verdünner 1 h bei 145 °C erhitzt. Danach war das Produkt homogen; nach Abkühlung auf Raumtemperatur wurde es wachsartig fest.

9. Herstellungsbeispiel für das Farbmittel

(entsprechend EP 271 781)

9a) Stufe 1: OH-funktionelles Vorprodukt

335 Tle Trimethylolpropan und 1260 Tle Sojaölfettsäure wurden unter Durchleiten von Stickstoff in 1 h auf 140 °C, dann in 8 h auf 220 °C erhitzt, wobei das Reaktionswasser abdestilliert wurde. Nach 1 h bei 220 °C betrug die Säurezahl 8 mg KOH/g. Der Reaktionsansatz wurde auf 100 °C abgekühlt; bei dieser Temperatur wurden 36,5 Tle Adipinsäure zugegeben. Danach wurde erneut auf 220 °C erhitzt. Nach 4 1/2 bei 220 °C betrug die Säurezahl 5 mg KOH/g, die OH-Zahl 86 mg KOH/g.

9b) Stufe 2: NCO-funktionelles Vorprodukt

328,1 Tle des Vorprodukts 9a) und 87 Tle 2,4-Diisocyanatotoluol wurden unter $N_2$ 3/4 h bei 80 °C miteinander umgesetzt. Danach betrug der Gehalt an freien NCO-Gruppen 4,64 %.

9c) Stufe 3: Farbmittel

325,9 Tle des Vorprodukts 9b), 123,2 Tle des gelben Azofarbstoffs

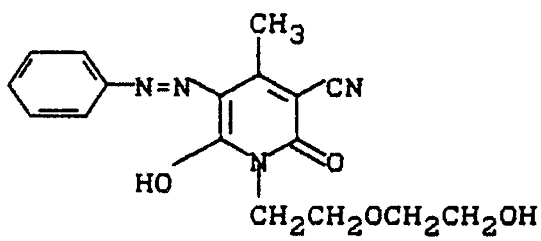

und 0,45 Tle Dibutylzinndilaurat wurden 1 h bei 120 °C miteinander umgesetzt. Danach war das Produkt homogen; nach Abkühlung auf Raumtemperatur wurde es wachsartig fest.

10) bis 31) Erfindungsgemäße Beispiele

Entsprechend der folgenden Tabelle wurden Farbmittel der Herstellungsbeispiele 1-9 mit Zusatzmitteln, entsprechend Formel (A) ausgewählt aus den beispielhaft angegebenen idealisierten Strukturen (B) bis (O), gemischt.

**Tabelle: Erfindungsgemäße Beispiele**

| Erfindungsgem. Bsp. Nr. | Farbmittel aus Herst.-Bsp. Nr. | Zusatzmittel gem. Formel: | Menge des Zusatz-Mittels, bez. auf Farbmittel (Gew.-%) |
|---|---|---|---|
| 10 | 1 | (O) | 8 |
| 11 | 2 | (B) | 0,25 |
| 12 | 2 | (B) | 0,5 |
| 13 | 2 | (B) | 8 |
| 14 | 2 | (I) | 8 |
| 15 | 2 | (N) | 8 |
| 16 | 3 | (B) | 1 |
| 17 | 3 | (B) | 2 |
| 18 | 3 | (B) | 4 |
| 19 | 3 | (B) | 8 |
| 20 | 3 | (B) | 12 |
| 21 | 3 | (B) | 16 |
| 22 | 3 | (H) | 8 |
| 23 | 3 | (O) | 8 |
| 24 | 4 | (B) | 8 |
| 25 | 4 | (O) | 8 |
| 26 | 5 | (O) | 8 |
| 27 | 6 | (B) | 0,5 |
| 28 | 6 | (B) | 2 |
| 29 | 7 | (B) | 1 |
| 30 | 8 | (B) | 1 |
| 31 | 9 | (B) | 1 |

Alle erfindungsgemäßen Beispiele sind mit handelsüblichen Bogen- und Rollenbuch- und Offsetdruck-Firnissen und Mineralölen mischbar.

Zu prüfen und zu drucken ist z.B. mit einer Rezeptur folgender Zusammensetzung:
56 Gew.-Tle einer 50 %igen Lösung eines handelsüblichen Rollenoffsetfirnisses auf Basis eines langöligen Leinölalkydharzes und eines Harzesters, wie in den Lackrohstoff-Tabellen von Karsten, 7. Aufl. 1981, beschrieben. 23 Gew.-Tle einer Farbmittel/Zusatzmittel-Mischung, z.B. gemäß Beispiel 10 bis 31,
21 Gew.-Tle eines Mineralöls mit begrenztem Aromatengehalt und engem Siedebereich, z.B. 210/230 °C oder 230/260 °C = 100 Gew.-Tle.

Prüft man nach dieser Rezeptur die erfindungsgemäßen Beispiele 10 bis 31, so erhält man z.B. im Rollenoffset-Druck oder nach dem heat-set-Offsetdruckverfahren einwandfreie Druckbilder und einen störungsfreien Druckverlauf ohne "Aufbauen" der Farben auf den Walzen der Druckmaschine.

Prüft man hingegen die Farbmittel der Herstellungsbeispiele 1-9 nach obiger Rezeptur, d.h. ohne Zusatzmittel der Formel (A), so erhält man zwar stets zunächst einwandfreie Druckergebnisse, doch baut sich nach kurzer Druckzeit (10-100 Blatt Auflage) eine Farbmittel- bzw. Druckfarbenschicht auf den Walzen der Druckmaschine auf. Dieses "Aufbauen" führt zwangsläufig zur Unterbrechung des Druckvorgangs und erfordert die komplette Reinigung der Druckwalzen. Eine solche Vorgehensweise ist in der Druckindustrie nicht praktikabel.

## Patentansprüche

1. Farbmittelzubereitungen enthaltend Verbindungen der Formel

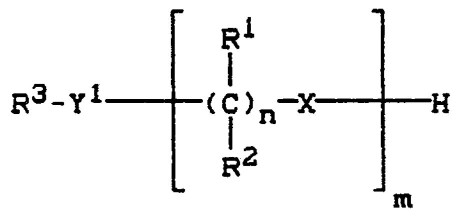

(A)

worin

$R^1$ und $R^2$ unabhängig voneinander und unabhängig von jeder Wiederholungseinheit H, $C_{1-24}$-Alkyl, Aryl oder $C_{1-24}$-Alkaryl,

$R^3$ H, $C_{1-24}$-Alkyl, Aryl, $C_{1-24}$-Alkaryl- wobei $R^3$ gegebenenfalls 1-3 weitere Substituenten der Reihe -O-$R^1$, -$NR^1R^2$ oder Reste

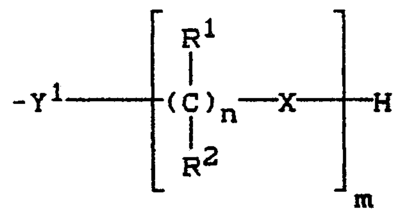

tragen kann,

$Y^1$ O, S, $NR^1$,

X unabhängig von jeder Wiederholungseinheit, O, S,

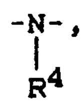

wobei $R^4$ = H, $C_{1-24}$-Alkyl, Aryl, $C_{1-24}$-Alkylaryl oder

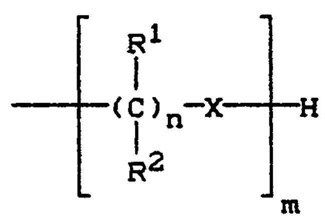

n eine ganze Zahl von 2-4 und

m eine ganze Zahl von 3-450 bedeutet,

2. Druckfarben enthaltend Verbindungen der Formel (A) des Anspruches 1.

3. Farbmittelzubereitungen gemäß Anspruch 1 enthaltend Verbindungen der Formel (A) mit n = 2, x = O, $R_1$ = H, $CH_3$, $R_2$ = H oder $CH_3$, $Y_1$ = O, $R_3$ = Rest eines mono-, di-, tri- oder tetrafunktionellen aliphatischen Alkohols mit 2-8 C-Atomen.

4. Farbmittelzubereitung gemäß Ansprüchen 1 und 2 enthaltend Verbindungen (A) mit $R^3$ = Rest eines aliphatischen Diols oder Triols mit 2-12 C-Atomen und m = 10-100.

5. Farbmittelzubereitungen gemäß Ansprüchen 1-3 enthaltend 0,01-20 Gew.-% einer Verbindung (A).

6. Farbmittelzubereitung, insbesondere Offsetdruckfarben gemäß Ansprüchen 1-4, enthaltend als Farbmittel mindestens einen Farbstoff, der durch Reaktion eines Farbstoffs der Formel $F(Y'H)_n$, in der F einen Farbstoffrest, Y' = -O-, -S-,

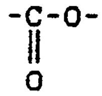 oder 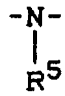

und $R^5$ = H, Alkyl, Cycloalkyl, n = 1-6 bedeuten, mit einer Verbindung die mindestens eine Isocyanatgruppe und mindestens 18 C-Atome enthält, erhalten wurde.

7. Farbmittelzubereitung gemäß Anspruch 5, enthaltend 0,5-20 Gew.-%, insbesondere 0,75-8 Gew.-% einer Verbindung (A).

8. Verfahren zur Herstellung von Farbmittelzubereitungen, insbesondere Druckfarben wie Offsetdruckfarben, dadurch gekennzeichnet, daß Verbindungen der Formel (A) des Anspruchs 1 als Zusatz verwendet werden.